# EUROPEAN PATENT APPLICATION

(11) **EP 3 285 309 A2**
(43) Date of publication of application: **21.02.2018**
(21) Application number: 17186156.0
(22) Date of filing: 14.08.2017
(51) Int. Cl.: H01M 2/08, H01M 10/04, H01M 10/28, H01M 10/653, H01M 10/647, H01M 10/6551, H01M 10/613, H01M 10/34

(54) **BIPOLAR BATTERY**

(30) Priority: 16.08.2016 JP 2016159430
(71) Applicant: TOYOTA JIDOSHA KABUSHIKI KAISHA, Toyota-shi, Aichi-ken, 471-8571 (JP)
(72) Inventor: OKUMURA, Motoyoshi, TOYOTA-SHI, AICHI-KEN, 471-8571 (JP); KIKUCHI, Takuro, TOYOTA-SHI, AICHI-KEN, 471-8571 (JP)
(74) Representative: Intès, Didier Gérard André

(57) **Abstract**

Each of plurality of unit cells (10) includes a current collecting plate (40) including a first main surface (35) and a second main surface (36) that are arranged in a stacking direction of the plurality of unit cells (1). The unit battery (41) includes a separator (44) impregnated with an electrolytic solution, the unit battery (41) being disposed on the first main surface (35), a seal member (42) provided on the first main surface (35), the seal member (42) surrounding a periphery of the unit battery (41; 41G), and the seal member (42) being in tight contact with the current collecting plates (40) adjacent to the seal member (42) in the stacking direction by a pressing force from the fastening tool (12).

## Description

### BACKGROUND OF THE INVENTION

### 1. Field of the Invention

The present invention relates to a bipolar battery, and particularly to a bipolar battery including multiple unit cells.

### 2. Description of Related Art

A bipolar battery described in Japanese Patent Application Publication No. 2011-151016 includes an electrode stacked body formed by alternatingly stacking bipolar electrodes and electrolyte layers in multiple stories. The bipolar electrode includes current collectors, positive electrodes formed on one surfaces of the current collectors, and negative electrodes on the other surfaces thereof.

Each electrolyte layer is formed on each separator, and a sealed portion in a frame shape is formed on an outer circumference of each separator. The electrolyte layer is formed on a portion of each separator, the portion being surrounded by each seal member.

The seal member is formed, using a mold or the like, by filling, pouring, or applying a resin for sealing into or to the separator, or impregnating the separator with the resin for sealing. The seal member is formed in the separator in a manner as to project from a front surface and a back surface of the separator. In formation of the seal member, a height (thickness) of the seal member is formed to be thicker than respective thicknesses of the positive electrode and the negative electrode.

After the bipolar electrodes and separators are stacked, pressure or heat is applied thereto so as to pressurize and deform or heat-seal the sealed portions to be in tight contact with each sealed current collector.

### SUMMARY OF THE INVENTION

In the bipolar battery described in JP 2011-151016 A, the seal member in a frame shape formed on each separator prevents the electrolytic solution contained in each electrolyte layer from oozing out of the separator.

Unfortunately, it is difficult to completely impregnate each separator with the resin in a thickness direction of the separator, and also difficult to prevent the leakage of the electrolytic solution from occurring in the seal member with the separator impregnated with the resin.

The present invention is a bipolar battery capable of promoting suppression of leakage of an electrolytic solution.

A bipolar battery of the present disclosure includes: a first end portion; a second end portion; a stacked body and a fastening tool. The stacked body includes: plurality of unit cells that are stacked between the first end portion and the second end portion. The fastening tool presses the first end portion and the second end portion such that the fastening tool fastens the stacked body. Each of the plurality of unit cells includes a current collecting plate, a unit battery, and a seal member. The current collecting plate includes a first main surface and a second main surface that are arranged in a stacking direction of the plurality of unit cells. The unit battery includes a separator impregnated with an electrolytic solution, the unit battery being disposed on the first main surface. The seal member is provided on the first main surface. The seal member surrounds a periphery of the unit battery, and the seal member is in tight contact with the current collecting plates adjacent to the seal member in the stacking direction by a pressing force from the fastening tool.

According to the above bipolar battery, unit battery is surrounded by the seal member. The seal member is in tight contact with the adjacent current collecting plates in the stacking direction by the pressing force from the fastening tool. Accordingly, the seal member suppresses the electrolytic solution with which the separator of the unit battery is impregnated from leaking out to the outside.

The above fastening tool may include: a first pressing plate pressing the first end portion of the stacked body; a second pressing plate pressing the second end surface; and plurality of connecting members connecting the first pressing plate and the second pressing plate. The above plurality of connecting members may be arranged such that the plurality of connecting members (23) are apart from each other, and the stacked body may be exposed to the outside.

According to the bipolar battery, a pressing force is applied to each seal member by the pressing force from the first pressing member and the second pressing member so that the seal member comes into tight contact with the current collecting plates. In addition, the connecting members are disposed with a distance therebetween, so that the stacked body is exposed to the outside air, to thus cool the stacked body.

When each current collecting plate and each seal member are viewed from a position apart from the stacking direction, the seal member may be located in an inner side of the current collecting plate, and the current collecting plate may include a heat-dissipating portion that outwardly protrudes from the seal member, and may be exposed to the outside air.

According to the above bipolar battery, it is possible to dissipate more heat from the heat-dissipating portion of the current collecting plate.

The above current collecting plate may include an electric insulating member covering a portion of the current collecting plate located more outward than the seal member.

According to the above bipolar battery, at more outward positions than the seal member, even when the current collecting plates become warped so that the adjacent current collecting plates in the stacking direction come into contact with each other, the electric insulating member can suppress occurrence of short-circuit.

The above fastening tool may include: a first metallic pressing plate pressing the first end portion of the stacked body; and a second metallic pressing plate pressing the second end portion. The bipolar battery may further include a heat insulating member disposed at least one of between the first pressing plate and the first end portion and between the second pressing plate and the second end portion.

According to the above bipolar battery, since the heat insulating members are provided between the pressing plates and the unit cell, to thereby reduce variation in temperature of the respective unit cell adjacent to the corresponding pressing plates due to the temperature of the pressing plates. The battery characteristics such as charging property, discharging property, and battery capacity vary depending on the temperature; thus, it is possible to suppress that the battery characteristics of the unit battery adjacent to the pressing plates vary due to the temperatures of the pressing plates. Through this, it is possible to suppress variation in battery characteristics of the entire bipolar battery.

The above heat insulating member may be an electric insulating material. According to this bipolar battery, it is possible to secure electric insulation between the pressing plates and the stacked body by the heat insulating members.

When each above unit battery is viewed from the stacking direction, the separator may cover a portion of the first main surface of each current collecting plate that is located between a placement part of each unit battery and a placement position of seal member.

According to the above bipolar battery, of the first main surface of the current collecting plate, the inside of the seal member is covered by the separator. Hence, for example, even when a gas is generated from the unit battery and the current collecting plate become warped in the inner side of the seal member, it is possible to suppress that the adjacent current collecting plates in the stacking direction come into direct contact with each other, to thus suppress occurrence of short-circuit.

The seal member may include a stepped portion on which an outer circumferential edge of the separator is placed. During the manufacturing process of the positive electrodes or the negative electrodes, needle-like burrs might be formed on the positive electrodes or the negative electrodes. According to the above bipolar battery, it is possible to suppress that each separator comes into contact with these needle-like burrs.

The above stacked body may include first current collecting plates and second current collecting plates arranged in the stacking direction. Each of the unit batteries may be held between each first current collecting plate and each second current collecting plate. Each of the unit batteries may include a positive electrode formed on the first main surface of each first current collecting plate, and a negative electrode formed on the second main surface of each second current collecting plate. The bipolar battery may include a rough portion having recesses and projections, the recesses and the projections being formed in at least either of a portion of the first current collecting plate in which the positive electrode is formed and a portion of the second current collecting plate in which the negative electrode is formed. The above the current collecting plate may include a positive electrode arranged on the first main surface of the current collecting plate, a negative electrode arranged on the second main surface of the current collecting plate, and a rough portion having recesses and projections. The rough portion may be arranged in at least one of a portion of each of the first main surface in which the positive electrode is arranged and a portion of the second main surface in which the negative electrode is arranged.

According to the above bipolar battery, for example, it is possible to increase a contact area of at least either the positive electrode or the negative electrode with the current collecting plate, and promote reduction of electric resistance of at least either the positive electrode or the negative electrode as well as tight contact thereof with the current collecting plate.

The above stacked body may include first current collecting plates and second current collecting plates arranged in the stacking direction. Each of the unit batteries may be held between each first current collecting plate and each second current collecting plate. Each of the unit batteries may include a positive electrode formed on the first main surface of each the first current collecting plate, and a negative electrode formed on the second main surface of each the second current collecting plate. The bipolar battery may include an electric conductive film formed between at least one of the first main surface and the positive electrode of each first current collecting plate, and the second main surface and the negative electrode of each second current collecting plate. The current collecting plate may include a positive electrode arranged on the first main surface of the current collecting plate, and a negative electrode arranged on the second main surface of the current collecting plate, and the unit battery may include an electric conductive film arranged in at least one of between the first main surface and the positive electrode and between the second main surface and the negative electrode.

According to the above bipolar battery, it is possible to promote reduction of the contact resistance and tight contact of at least one of the positive electrodes and the negative electrodes with each corresponding current collecting plate. As the aforementioned electric conductive film, a carbon film is employed.

The current collecting plate may include a recess located between a placement position of the unit battery and the seal member in the current collecting plate. An electrolytic solution may be stored in the recess. The separator may be in contact with the electrolytic solution in the recess.

According to the above bipolar battery, it is possible to suppress exhaustion of the electrolytic solution.

According to the bipolar battery of the present disclosure, it is possible to suppress leakage of the electrolytic solution.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic view schematically showing a vehicle in which a bipolar battery according to a present embodiment 1 is installed;
FIG. 2 is a cross sectional view showing the bipolar battery;
FIG. 3 is an exploded perspective view of the bipolar battery;
FIG. 4 is a perspective view showing a unit cell;
FIG. 5 is a plan view showing the unit cell;
FIG. 6 is a cross sectional view showing a bipolar battery according to an embodiment 2;
FIG. 7 is a cross sectional view showing a bipolar battery according to a comparative example;
FIG. 8 is a cross sectional view showing a bipolar battery according to an embodiment 3;
FIG. 9 is a plan view showing the unit cell;
FIG. 10 is a plan view showing a variation of the unit cell;
FIG. 11 is a cross sectional view showing a bipolar battery according to an embodiment 4;
FIG. 12 is a cross sectional view showing a configuration of a stepped portion and a periphery thereof;
FIG. 13 is a plan view showing a seal member and a current collecting plate;
FIG. 14 is a plan view showing the seal member, the current collecting plate, and a separator;
FIG. 15 is a cross sectional view showing a configuration of each unit cell and a periphery thereof;
FIG. 16 is a cross sectional view showing a part of a bipolar battery according to an embodiment 5;
FIG. 17 is a cross sectional view showing a configuration of a rough surface portion of each current collecting plate and a periphery thereof;
FIG. 18 is a cross sectional view showing a current collecting plate provided with no rough surface;
FIG. 19 is a cross sectional view showing a part of a bipolar battery according to a variation of the present embodiment 5;
FIG. 20 is a cross sectional view showing a part of a bipolar battery according to a present embodiment 6;
FIG. 21 is a partial cross sectional view showing a variation of the bipolar battery; and
FIG. 22 is a perspective view showing the bipolar battery.

### DETAILED DESCRIPTION OF EMBODIMENTS

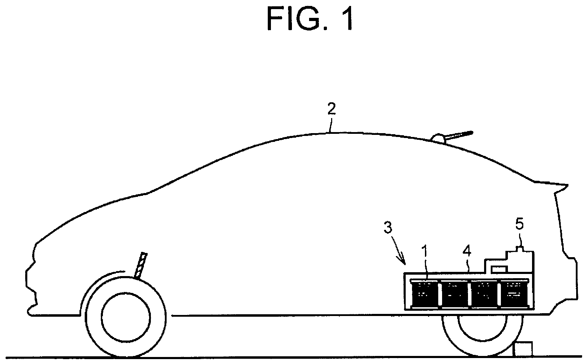

With reference to FIG. 1 to FIG. 22, a bipolar battery according to each embodiment will be described. In FIG. 1 to FIG. 22, the same or substantially the same configurations will be denoted with the same reference numerals, and overlapped description thereof might be omitted. FIG. 1 is a schematic view schematically showing a vehicle 2 in which bipolar batteries 1 according to the present embodiment 1 are installed. As shown in FIG. 1, the vehicle 2 includes a battery unit 3.

The battery unit 3 includes a battery case 4 housing the multiple bipolar batteries 1 therein, and a fan 5 supplying a cooling air into the battery case 4.

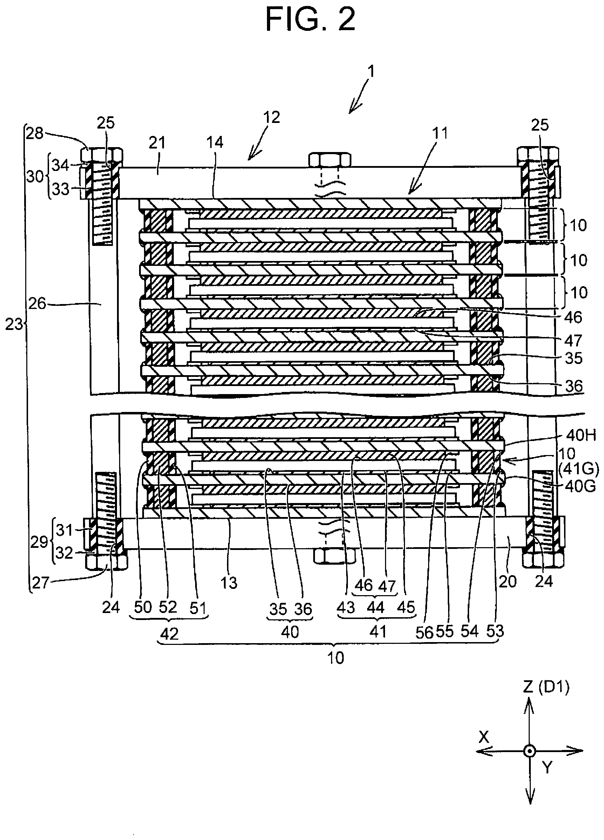

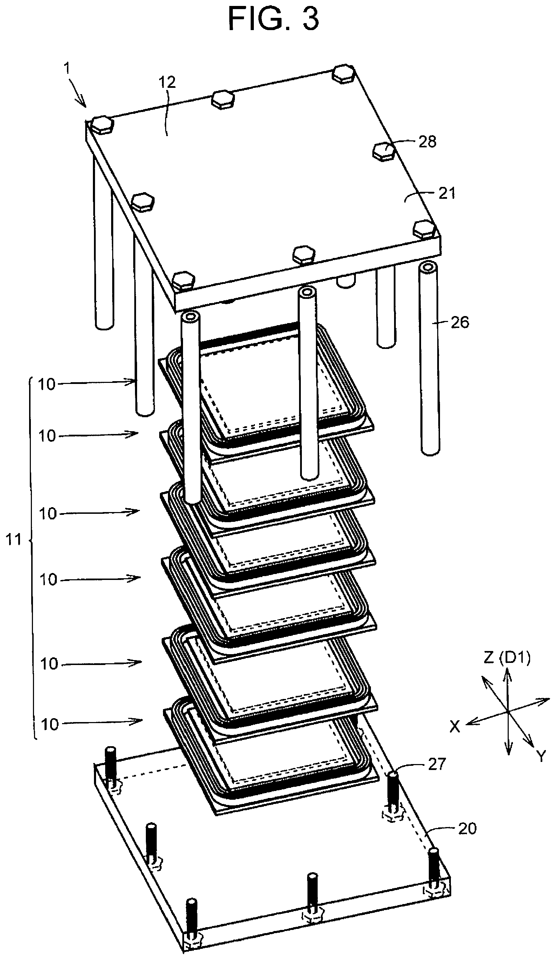

FIG. 2 is a cross sectional view showing the bipolar battery 1, and FIG. 3 is an exploded perspective view of the bipolar battery 1. As shown in FIG. 2, the bipolar battery 1 includes a stacked body 11 formed by stacking multiple unit cells 10 in a stacking direction D1, and a fastening tool 12 to fasten the stacked body 11 in the stacking direction D1.

The stacked body 11 includes an end surface (a first end portion) 13 and an end surface (a second end portion) 14 that are arranged in the stacking direction D1.

The fastening tool 12 includes a metallic pressing plate (a first pressing plate) 20 pressing the end surface 13, a metallic pressing plate (a second pressing plate) 21 pressing the end surface 14, and multiple connecting members 23 connecting the pressing plate 20 and the pressing plate 21.

The pressing plate 20 is formed with multiple through-holes 24, and the pressing plate 21 is also formed with multiple through-holes 25.

Each connecting member 23 includes a connecting shaft 26 disposed between the pressing plate 20 and the pressing plate 21, a bolt 27 connecting one end of the connecting shaft 26 to the pressing plate 20, a bolt 28 connecting the other end of the connecting shaft 26 to the pressing plate 21, and electric insulating members 29, 30.

The electric insulating member 29 is formed with a through-hole into which a shaft portion of the bolt 27 is inserted. The electric insulating member 29 includes a cylindrical portion 31 in a cylindrical shape to be inserted into the through-hole 24 and a flange portion 32 formed at a lower end of the cylindrical portion 31. The flange portion 32 is disposed on a bottom surface of the pressing plate 20.

The electric insulating member 29 is a member to electrically insulate the pressing plate 20 from the bolt 27, and the flange portion 32 electrically insulates the pressing plate 20 from a head portion of the bolt 27, and the cylindrical portion 31 electrically insulates the pressing plate 20 from the shaft portion of the bolt 27.

The electric insulating member 30 is also configured to be the same as the electric insulating member 29, and the electric insulating member 30 includes a cylindrical portion 33 to be inserted into a through-hole 25, and a flange portion 34 disposed on a top surface of the pressing plate 21. The electric insulating member 30 electrically insulates the pressing plate 21 from the bolt 28.

One end of the connecting shaft 26 is formed with a female-threaded portion to be screwed with the shaft portion of the bolt 27, and the other end of the connecting shaft 26 is formed with a female-threaded portion to be screwed with a shaft portion of the bolt 28.

The bolts 27, 28 are screwed with the connecting shaft 26, and the bolts 27, 28 are then fastened so that the pressing plates 20, 21 press the end surfaces 13, 14 of the stacked body 11.

The pressing plates 20, 21 are connected to each connecting shaft 26 with the electric insulating members 29, 30 interposed therebetween, and the electric insulating members 29, 30 electrically insulate the pressing plates 20, 21 from the bolts 27, 28, respectively. In this manner, the connecting shafts 26 are out of contact with the pressing plates 20, 21, so that the connecting shafts 26 are electrically insulated from the pressing plates 20, 21. The pressing plate 20 and the pressing plate 21 are electrically connected to the stacked body 11, while the connecting shafts 26 are electrically insulated from the pressing plates 20, 21; therefore, short-circuit between the pressing plate 20 and the pressing plate 21 is suppressed. Thus, the pressing plate 20 and the pressing plate 21 can be used as current collecting terminals.

Here, as shown in FIG. 3, the connecting shafts 26 are so disposed as to surround a periphery of the stacked body 11 with a distance therebetween. Hence, a cooling air from the fan 5 passes through between the connecting shafts 26 to reach the stacked body 11, thus cooling the stacked body 11.

Specifically, the stacked body 11 is exposed to the outside air so as to directly dissipate heat of the stacked body 11 to the outside air.

The configuration of the fastening tool 12 is not limited to the aforementioned configuration. For example, instead of the connecting members 23, there may be employed fastening bands to fasten the pressing plates 20, 21, or elastic members such as springs to urge the pressing plates 20, 21 such that the pressing plates 20, 21 come closer to each other. The electric insulating members 29, 30 may be omitted, and resin bolts may be used as the bolts 27, 28.

In FIG. 2, the bipolar battery 1 is formed by stacking current collecting plates 40 each having a negative electrode 45 on a lower surface 36 thereof and a positive electrode 43 on an upper surface 35 thereof, and a seal member 42 and a separator 44 disposed on each current collecting plate 40 one by one in this order, and thereafter, fastening the stacked body 11 by the fastening tool 12. A so-called bipolar electrode is formed by the current collecting plates 40, the negative electrodes 45 formed on the lower surfaces 36 of the current collecting plates 40, and the positive electrodes 43 formed on the upper surfaces 35 of the current collecting plates 40. Through the stacking in the above manner, there is formed each unit cell 10 that includes: the current collecting plate 40 including the upper surface 35 (first main surface) and the lower surface 36 (second main surface) that are arranged in the stacking direction D1; the unit battery 41 disposed on the upper surface 35 of the current collecting plate 40; and the seal member 42 formed on the upper surface 35 so as to surround the periphery of the unit battery 41. Each unit cell 10 further includes seal members 53, 54 formed on respective outer circumferential surfaces of the seal members 42, and hydrophobic insulating films 55, 56 formed in respective inner sides of the seal members 42.

The current collecting plates 40 are made of metallic plates such as nickel plates and nickel-plated steel plates. A thickness of each current collecting plate 40 is 50 to 700 µm, for example. In this manner, each current collecting plate 40 has a predetermined thickness, and thus even if the multiple current collecting plates 40 are arranged with a distance therebetween, an outer circumferential edge of each current collecting plate 40 is suppressed from being warped.

Each unit battery 41 includes a separator 44 including: an upper surface (a third main surface) 46 and a lower surface (a fourth main surface) 47 that are arranged in the stacking direction D1; a negative electrode 45 disposed on the upper surface 46; and a positive electrode 43 disposed on the lower surface 47. A unit battery 41G of a unit cell 10G shown in FIG. 2 is held between a current collecting plate 40G and a current collecting plate 40H that are adjacent to each other in the stacking direction. The positive electrode 43 of the unit battery 41G is formed on the upper surface 35 of the current collecting plate 40G, and the negative electrode 45 of the current collecting plate 40G is formed on the lower surface 36 of the current collecting plate 40H. The separator 44 of the unit battery 41G is disposed between the positive electrode 43 and the negative electrode 45.

The positive electrode 43 contains a positive-electrode active material of approximately 80 to 99 mass%. The positive-electrode active material is nickel hydroxide (Ni(OH)₂). The nickel hydroxide is changed into nickel oxyhydroxide (NiOOH) by charging. The nickel oxyhydroxide returns to the nickel hydroxide by discharging. That is, the positive electrode 43 contains at least one of nickel hydroxide and nickel oxyhydroxide.

The positive electrode 43 may contain an electric conductive material and a binder other than the positive-electrode active material. The positive electrode 43 may contain an electric conductive material of approximately 0.5 to 10 mass%, for example. The electric conductive material may be, for example, cobalt oxide (CoO), cobalt hydroxide (Co(OH)₂), or the like. The positive electrode 43 may contain a binder of approximately 0.5 to 10 mass%, for example. The binder may be, for example, carboxymethyl cellulose (CMC), styrene-butadiene rubber (SBR), polytetrafluoroethylene (PTFE), or the like.

The negative electrode 45 contains a hydrogen absorbing alloy. The hydrogen absorbing alloy is a negative-electrode active material. The hydrogen absorbing alloy may be, for example, an AB5-type alloy or the like. An example of the AB5-type alloy may include LaNi₅, MmNi₅ ("Mm" indicates a mixture of rare earth metals referred to as "mischmetal"), for example. The negative electrode 45 may be a compact of a hydrogen absorbing alloy, or one including a base material on which a hydrogen absorbing alloy is supported. An example of the base material may include a punching metal or the like, for example.

An active material supporter may be used so as to form the positive electrode 43 or the negative electrode 45. The positive electrode 43 or the negative electrode 45 may be formed by joining the active material supporter to the upper surface 35 and the lower surface 36 of each current collecting plate 40 through welding, pressure-welding or the like, and also filling the active material supporter with a positive-electrode active material paste or a negative-electrode active material paste, for example. An example of the active material supporter may include a punching metal, a metal mesh, or the like, for example.

The separator 44 is non-woven fabric made of polyolefin, or the like, for example. The separator 44 is impregnated with an electrolytic solution. The electrolytic solution is a potassium hydroxide (KOH) solution, or the like, for example.

Note that the bipolar battery 1 according to the present embodiment is an aqueous battery. An aqueous battery is a battery containing an aqueous solution as the electrolytic solution, and a battery containing an alkaline electrolytic solution as the electrolytic solution is included in the aqueous battery.

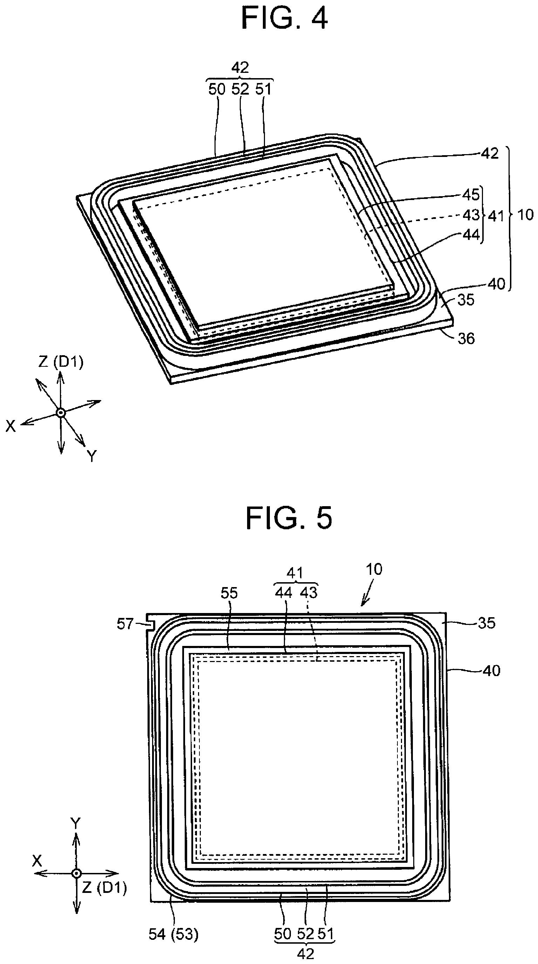

FIG. 4 is a perspective view showing each unit cell 10. As shown in FIG. 4, the separator 44 is the largest in the unit battery 41, the entire outer circumferential edge of the separator 44 outwardly protrudes from outer circumferential edges of the positive electrode 43 and the negative electrode 45.

The seal member 42 is formed in a loop shape that surrounds the periphery of the unit battery 41. The seal member 42 includes: a resin frame 50 in a loop shape; a resin frame 51 in a loop shape disposed in the inner side of the resin frame 50; and a gasket 52 disposed between the resin frame 50 and the resin frame 51.

The gasket 52 is formed by a resin having a long-term high air-tightness and excellent heat-resistance, chemical resistance, and electric insulation, and is formed by a polyarylene sulfide resin, a thermoplastic elastomer, or a resin containing a polyarylene sulfide resin, or the like, for example.

As shown in FIG. 2, each seal member 42 is tightly held between the two adjacent current collecting plates 40 in the stacking direction D1 by a pressing force applied by the fastening tool 12 onto the stacked body 11. A height of the gasket 52 is reduced to be lower than a height thereof in a natural state by the holding force applied from the two adjacent current collecting plates 40, and each gasket 52 is in tight contact with the adjacent current collecting plates 40 in the stacking direction D1.

Since each gasket 52 is in tight contact with each corresponding current collecting plate 40, the electrolytic solution of each unit battery 41 is suppressed from leaking out to the outside. The configuration of the seal member 42 is not limited to the configuration of including the resin frames 50, 51 and the gasket 52. For example, the gasket 52 may be used as the seal member 42, or a sealing material may be employed other than the gasket 52.

Further, each unit cell 10 includes the seal members 53, 54 formed on the outer circumferential surfaces of the resin frame 50. Each resin frame 50 is held between the two adjacent current collecting plates 40G, 40H in the stacking direction D1, and the seal member 53 is formed in a loop shape in a manner as to fill a corner formed by the current collecting plate 40G on one side and the resin frame 50. The seal member 54 is formed in a manner as to fill a corner formed by the current collecting plate 40H on the other side and the resin frame 50. This configuration promotes enhanced sealing properties of the electrolytic solution.

FIG. 5 is a plan view showing each unit cell 10. Specifically, this is a plan view of the current collecting plate 40, the seal member 42, and others as viewed from a position apart therefrom in the stacking direction D1. In this FIG. 5, the negative electrode 45 is not illustrated.

As shown in this FIG. 5, each unit cell 10 includes the hydrophobic insulating film 55 formed on the upper surface 35 in a manner as to surround the periphery of the unit battery 41.

The hydrophobic insulating film 55 is formed of a hydrophobic material, and is formed of a preferable hydrophobic material such as fluoropolymer or a similar material, for example. For example, the hydrophobic insulating film 55 is formed of a material realizing that a contact angle of the electrolytic solution in the hydrophobic insulating film 55 becomes 90° or more.

An outer circumferential edge of the hydrophobic insulating film 55 is located more outward than an outer circumferential edge of the separator 44, and the outer circumferential edge of the separator 44 is located on the hydrophobic insulating film 55.

Hence, even if the electrolytic solution tends to ooze (i.e., leak) out from the outer circumferential edge of the separator 44 onto the hydrophobic insulating film 55, the hydrophobic insulating film 55 having a hydrophobic property repels the electrolytic solution. As a result, the electrolytic solution with which the separator 44 is impregnated becomes hard to leak out from the separator 44, to thus suppress the electrolytic solution from reaching the seal member 42. Accordingly, it is possible to suppress leakage of the electrolytic solution to the outside.

Note that it is not always essential that the outer circumferential edge of the separator 44 be in contact with the hydrophobic insulating film 55, and the hydrophobic insulating film 55 may be located outside the separator 44, as viewed in a plan view.

Each unit cell 10, as shown in FIG. 2, includes the hydrophobic insulating film 56 that is formed on the lower surface 36 of each current collecting plate 40 in a manner as to surround the periphery of the unit battery 41.

The above configured bipolar battery 1 is formed by alternately stacking the current collecting plates 40 each having the negative electrode 45 formed on the lower surface 36 thereof and the positive electrode 43 formed on the upper surface 35 thereof, and the seal members 42, one by one on the upper surface of the pressing plate 20, and thereafter fastening the stacked body 11 by the fastening tool 12. At this time, it is necessary to arrange each current collecting plate 40 at a predetermined position. For this reason, in the bipolar battery 1 according to the present embodiment 1, as shown in FIG. 5, a cutout 57 is formed on the outer circumferential edge of each current collecting plate 40. When the current collecting plates 40 are stacked, the respective current collecting plates 40 are stacked one by one such that the cutouts 57 overlap one another. The cutouts 57 function as a mark, and thus a round hole or a rectangular hole may be employed instead of the cutout 57, and various other shapes may be employed as a cutout shape.

As aforementioned, the bipolar battery 1 according to the present embodiment 1 includes the unit batteries 41 on the upper surfaces 35 of the respective current collecting plates 40, and the seal members 42 surrounding peripheries of the respective unit batteries 41, and each of the seal members 42 is held between each two adjacent current collecting plates 40 by the pressing force from the fastening tool 12, to thereby suppress leakage of the electrolytic solution.

Further, the fastening tool 12 does not close the stacked body 11, so that circumferential surfaces of the stacked body 11 are exposed to the outside air, and the stacked body 11 can be directly cooled by cooling air or the like. In the present embodiment 2, there will be described a configuration to provide heat insulating members between the stacked body and the pressing plates so as to reduce variation in temperature of the unit batteries at the uppermost position and the lowermost position, to thereby stabilize electric characteristics of the bipolar battery.

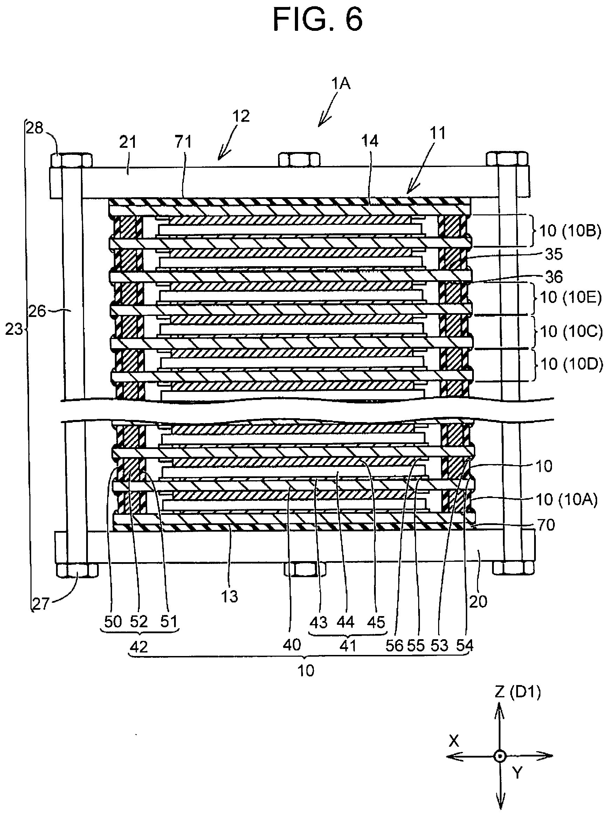

FIG. 6 is a cross sectional view showing a bipolar battery 1A according to the embodiment 2. As shown in FIG. 6, the bipolar battery 1A includes the stacked body 11, a heat insulating member 70 disposed between the stacked body 11 and the pressing plate 20, and a heat insulating member 71 disposed between the stacked body 11 and the pressing plate 21.

The stacked body 11 includes: a unit cell 10A adjacent to the pressing plate 20; a unit cell 10B adjacent to the pressing plate 21; and unit cells 10C, 10D, 10E that are located in the vicinity of a middle part of the stacked body 11 in the stacking direction D1.

The heat insulating member 70 is disposed between the end surface 13 of the stacked body 11 and the pressing plate 20. The heat insulating member 71 is disposed between the end surface 14 of the stacked body 11 and the pressing plate 21.

Each of the heat insulating members 70, 71 is formed of polyurethane, polyethylene, a phenol resin, foamed styrene, glass wool, cellulose fiber, rock wool, or the like, and is also formed by a material having a heat insulation property and an electric insulation property. Each of the heat insulating members 70, 71 may be formed by a metallic plate, the above described heat insulating member, and a heat insulating member having an electric insulation property. In this case, the metallic plates are disposed on the pressing plates 20, 21 side and the heat insulating members are disposed on the stacked body 11 side.

The heat insulating member 70 electrically insulates the pressing plate 20 from the unit cell 10A, and the heat insulating member 71 electrically insulates the pressing plate 21 from the unit cell 10B. The stacked body 11 and the fastening tool 12 are electrically insulated from each other by the heat insulating members 70, 71. Hence, the bipolar battery 1A does not include the electric insulating members 29, 30 that are provided in the bipolar battery 1 according to the aforementioned embodiment.

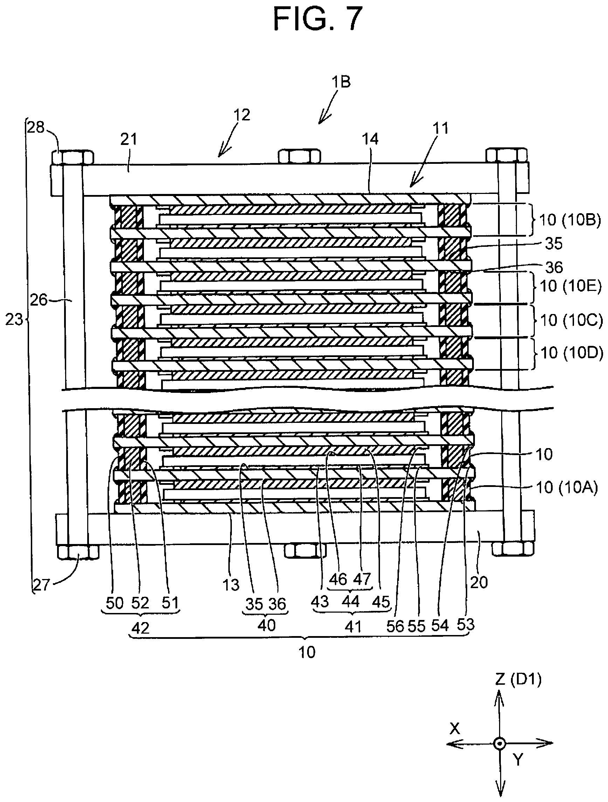

FIG. 7 is a cross sectional view showing a bipolar battery 1B according to a comparative example. In the bipolar battery 1B shown in FIG. 7, each of the connecting shafts 26 is formed by an electrically insulating material, and the bipolar battery 1 B is not provided with the heat insulating member 70 and the heat insulating member 71. When charging and discharging are performed in this bipolar battery 1B, each unit battery 41 generates heat, and thus the temperature of each unit cell 10 is increased.

At this time, the unit cells 10D, 10E adjacent to the unit cell 10C also generate heat; thus the temperature of the unit cell 10C is likely to become the same temperature as those of the unit cells 10D, 10E. As a result, the unit cells 10 located at and near the middle part of the stacked body 11 in the stacking direction D1 are unlikely to experience variation in temperature among them.

Battery characteristics such as charging characteristics, discharging characteristics, and battery capacity of each unit cell 10 vary depending on the temperature; therefore, the unit cells 10 located near the middle part of the stacked body 11 are more unlikely to experience variation in battery characteristics.

In the meantime, the temperatures of the unit cells 10A, 10B are more likely to vary by influence of the temperatures of the metallic pressing plates 20, 21, and the temperatures of the pressing plates 20, 21 are more likely to vary by influence of the ambient temperature. As a result, the unit cells 10A, 10B are more likely to have variation in temperature thereof, and the unit cells 10A, 10B are also more likely to have variation in electric characteristics thereof. Consequently, the electric characteristics of the bipolar battery 1B are more likely to vary by influence of the ambient environment.

In the meantime, in the bipolar battery 1A according to the embodiment 2, as shown in FIG. 6, the heat insulating member 70 is disposed between the pressing plate 20 and the unit cell 10A so as to reduce influence on the unit cell 10A from the pressing plate 20 to be smaller. Similarly, the heat insulating member 71 is disposed between the pressing plate 21 and the unit cell 10B so as to reduce influence on the unit cell 10B from the pressing plate 21 to be smaller.

Through this, it is possible to suppress variation in electric performance of the unit cells 10A, 10B, to thus suppress variation in electric characteristics of the bipolar battery 1B.

In the above example, the case in which both the heat insulating members 70, 71 are provided has been explained, but one of the heat insulating members 70, 71 may be provided. In this case, the electric insulating member 29 or the electric insulating member 30 is provided. In the present embodiment 3, there will be described a configuration that for the sake of promoting enhanced heat dissipation of the stacked body 11, each of the current collecting plates 40 is formed with a heat-dissipating portion greatly protruding from the seal member 42, to thereby promote enhanced heat dissipation of the stacked body 11.

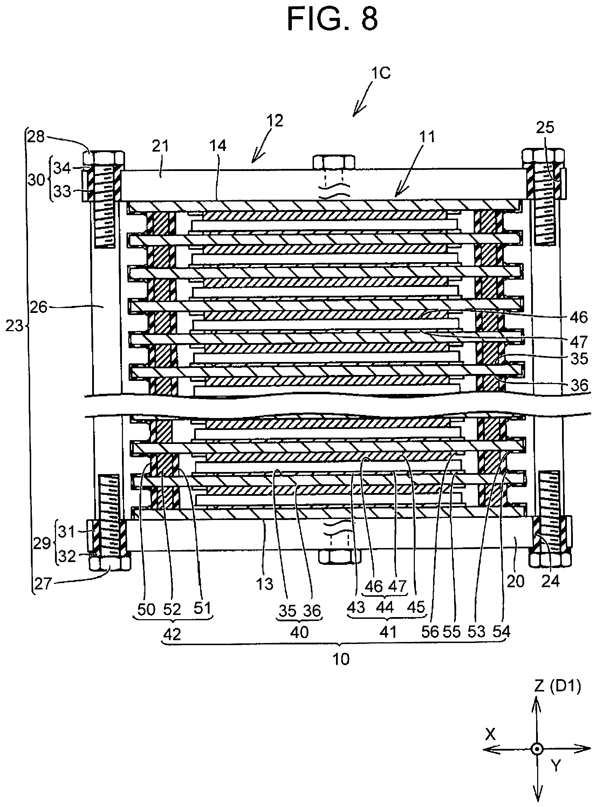

FIG. 8 is a cross sectional view showing a bipolar battery 1C according to the embodiment 3. As shown in FIG. 8, the outer circumferential edge of each current collecting plate 40 is so formed as to protrude more outward than each seal member 42. Of each current collecting plate 40, a portion protruding more outward than the seal member 42 is readily cooled by the cooling air from the fan 5, thus suppressing increase in temperature of each unit cell 10.

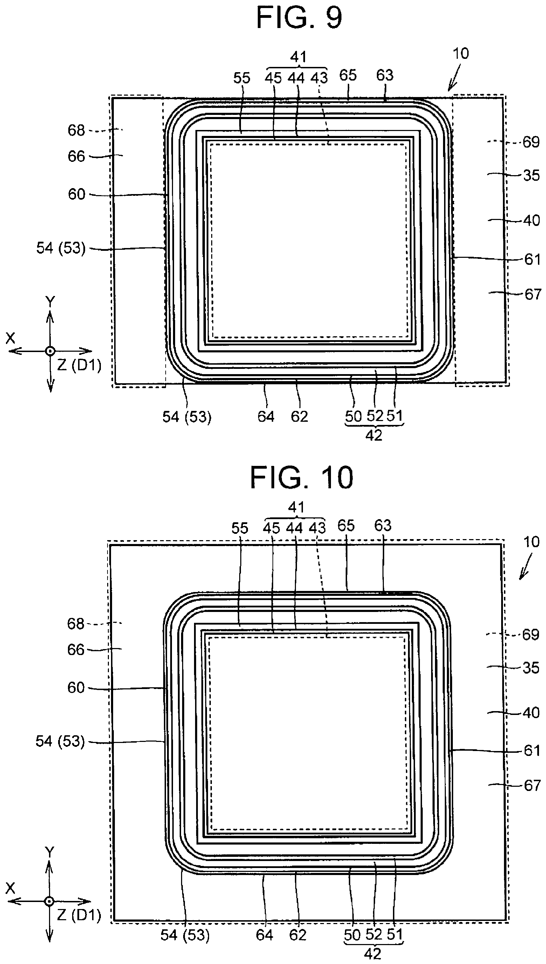

FIG. 9 is a plan view showing each unit cell 10. Specifically, this is a plan view of each unit cell 10, as viewed from a position apart therefrom in the stacking direction D1.

As shown in FIG. 9, the seal member 42 is located in an inner side of the current collecting plate 40, and a part of the current collecting plate 40 is formed to greatly protrude outwardly from the outer circumferential edge of the seal member 42.

The seal member 42 is formed in a substantially rectangular shape. The outer circumferential edge of the seal member 42 includes a side surface 60 and a side surface 61 that are arranged in an X direction, and a side surface 62 and a side surface 63 that are arranged in a Y direction.

The current collecting plate 40 includes proximate portions 64, 65 extending along the side surfaces 62, 63, heat-dissipating portions 66, 67 greatly protruding outward from the side surfaces 60, 61, and insulating films 68, 69 covering the heat-dissipating portions 66, 67.

Respective distances between the outer circumferential edges of the heat-dissipating portions 66, 67 and the side surfaces 60, 61 are longer than respective distances between the outer circumferential edges of the proximate portions 64, 65 and the side surfaces 62, 63, and respective exposed areas of the heat-dissipating portions 66, 67 are greater than respective exposed areas of the proximate portions 64, 65. Accordingly, it is possible to favorably dissipate heat from the heat-dissipating portions 66,67.

As shown in FIG. 10, the entire outer circumferential edge of each current collecting plate 40 may be configured to protrude from the seal member 42.

In FIG. 9, the insulating films 68, 69 are so formed as to cover front surfaces of the heat-dissipating portions 66, 67 so that mutual electric insulation between the adjacent heat-dissipating portions 66, 67 in the stacking direction D1 can be secured even when these heat-dissipating portions 66, 67 come into contact with each other. Formation of the insulating film 68 is not limited to the case of applying the insulating film 68 onto the entire surfaces of the heat-dissipating portions 66, 67, but the insulating film 68 may be formed on the outer circumferential edge of the current collecting plate 40 or the outer circumferential edges of the heat-dissipating portions 66, 67 and the peripheries thereof, for example.

As long as the insulating films 68, 69 are formed on portions of the current collecting plate 40 where the current collecting plate 40 comes into contact with the other current collecting plate 40 adjacent in the stacking direction D1 when the heat-dissipating portions 66, 67 are warped, it is possible to secure the electric insulation between the adjacent current collecting plates 40.

The insulating film 68 can be formed by various methods such as application of an insulating tape, and caulking, thermal-spraying application, or coating of an insulating material, or resin-molding. In the embodiment 4, a configuration of suppressing short-circuit between the adjacent current collecting plates 40 in the stacking direction D1 inside each seal member 42 is described.

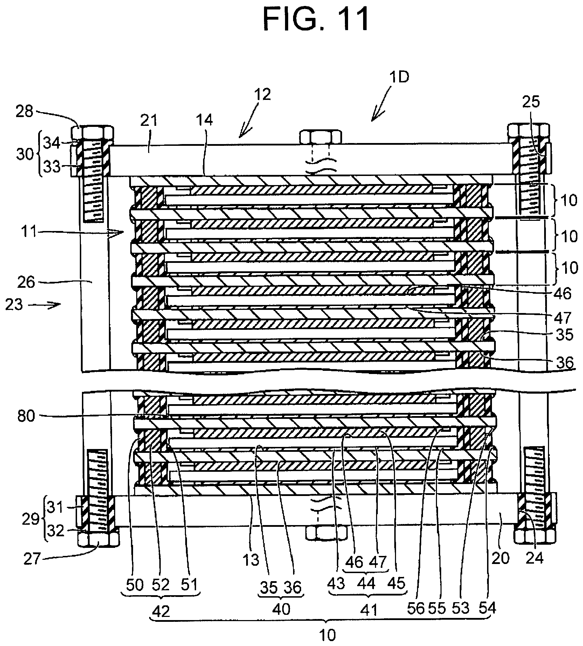

FIG. 11 is a cross sectional view showing a bipolar battery 1D according to the embodiment 4. As shown in FIG. 11, a stepped portion 80 is formed on an inner circumferential surface of each seal member 42 so that the outer circumferential edge of each separator 44 is placed on this stepped portion 80.

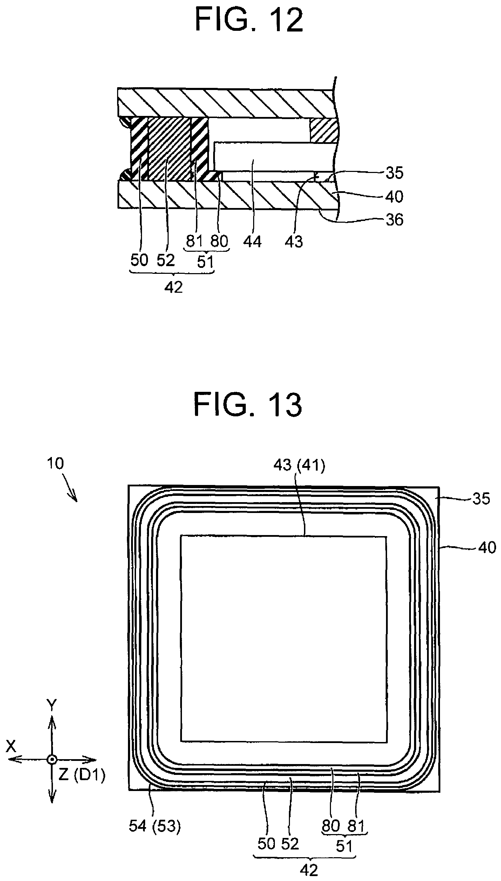

FIG. 12 is a cross sectional view showing a configuration of the stepped portion 80 and the periphery thereof. As shown in FIG. 12, the resin frame 51 includes: a frame portion 81 extending along an inner circumferential surface of the gasket 52; and the stepped portion 80 formed on an inner circumferential surface of the frame portion 81.

The stepped portion 80 is disposed on the upper surface 35 of the current collecting plate 40, and the outer circumferential edge of the separator 44 is placed on the stepped portion 80 so as to prevent the separator 44 from coming into contact with the positive electrode 43.

If each positive electrode 43 is formed by the active material supporter, needle-like burrs might be formed on the circumferential surface of the positive electrode 43 when the active material supporter is sheared. If the separator 44 comes into contact with the burrs, the burrs might break through this separator 44.

However, in the bipolar battery 1D, each separator 44 is placed on each corresponding stepped portion 80, to thereby suppress the separator 44 from coming into contact with the burrs.

FIG. 13 is a plan view showing the positive electrode 43, the seal member 42, and the current collecting plate 40. In this FIG. 13, the negative electrode 45 and the separator 44 are not illustrated. In FIG. 13, the stepped portion 80 is formed in a loop shape. Here, a portion where the positive electrode 43 is placed is a placement part of the unit battery 41. In the upper surface 35 of each current collecting plate 40, a portion located between the outer circumferential edge of the positive electrode 43 and the inner circumferential edge of the seal member 42 is exposed.

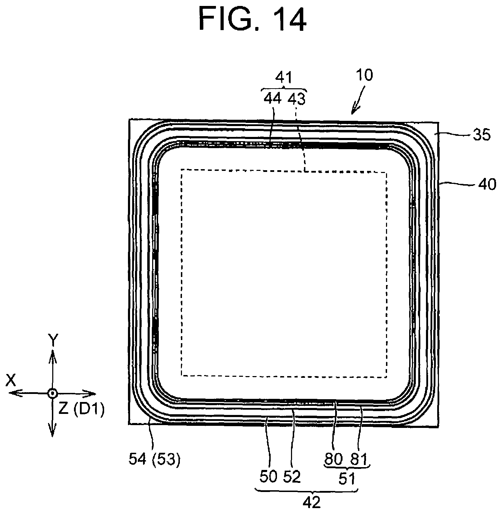

FIG. 14 is a plan view showing the separator 44, the positive electrode 43, the seal member 42, and the current collecting plate 40. As shown in this FIG. 14, the outer circumferential edge of the separator 44 is placed on the stepped portion 80, and in the upper surface 35 of the current collecting plate 40, a portion located between the positive electrode 43 and the seal member 42 is covered by the separator 44.

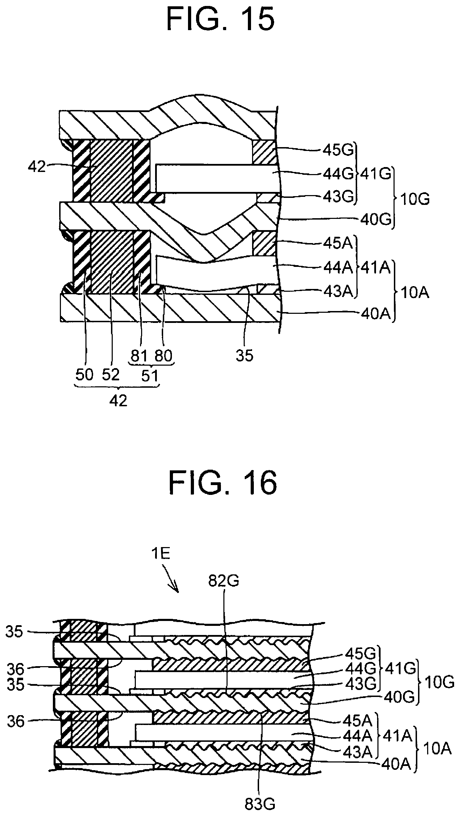

FIG. 15 is a cross sectional view showing a configuration of the unit cell 10A and the periphery thereof. As shown in FIG. 15, the unit cell 10G is provided on the upper surface side of the unit cell 10A.

When the electrolytic solution of the unit cell 10G is decomposed, a gas might be generated; and at the time of overcharge, for example, electrolysis of water contained in the electrolytic solution is caused as a side reaction of the electrode; thus a gas (hydrogen) might be generated.

Since the gas (hydrogen) is prevented from leaking out to the outside by the seal member 42 of the unit cell 10G, an inner pressure inside the unit cell 10G is increased, the current collecting plate 40G is deformed to swell out, so that the current collecting plate 40G and a current collecting plate 40A might come to closer to each other.

Specifically, of the current collecting plate 40G, a portion located between a seal member 42G and a positive electrode 43G is not supported by a unit battery 41A, and thus this portion might be deformed to swell downward.

On the other hand, a separator 44A of the unit cell 10A is disposed so as to cover the upper surface 35 of the current collecting plate 40A located between a positive electrode 43A and the seal member 42.

Hence, even if the current collecting plate 40G is deformed in the above manner, the separator 44A suppresses that the current collecting plate 40G and the current collecting plate 40A come into direct contact with each other, thereby suppressing occurrence of short-circuit between the current collecting plate 40A and the current collecting plate 40G.

In this manner, in the bipolar battery 1D according to the present embodiment 4, even if the inner pressure inside each unit cell 10 becomes increased, the current collecting plates 40 of the adjacent unit cells 10 in the stacking direction D1 can be suppressed from coming into contact with each other to be short-circuited. In the present embodiment 5, there will be described a configuration that in spite of occurrence of a phenomenon such as deformation of the current collecting plate 40, which encourages separation of the positive electrode 43 and the negative electrode 45 from the current collecting plate 40, a tight contact of the positive electrode 43 and the negative electrode 45 to the current collecting plates 40 is secured.

FIG. 16 is a cross sectional view showing a part of a bipolar battery 1E according to the embodiment 5. As shown in FIG. 16, a rough surface portion 82G is formed on the upper surface 35 of the current collecting plate 40G, and a rough surface portion 83G is formed on the lower surface 36.

The rough surface portion 82G is formed with the positive electrode 43G, and the rough surface portion 83G is formed with a negative electrode 45A.

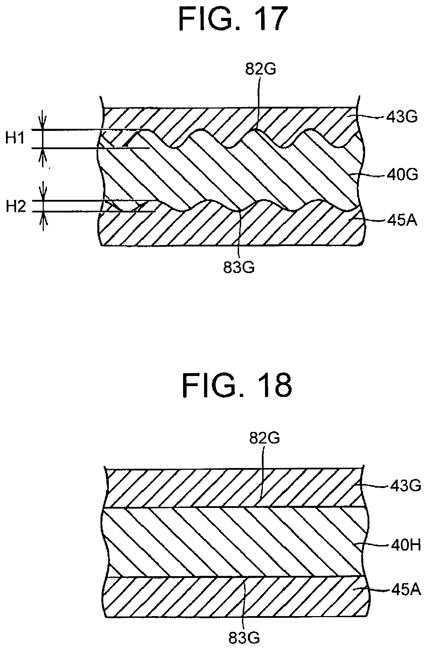

FIG. 17 is a cross sectional view showing a configuration of the rough surface portions 82G, 83G of the current collecting plate 40G and the periphery thereof; and FIG. 18 is a cross sectional view showing the current collecting plate 40H provided with no rough surface portions 82G, 83G.

In FIG. 17 and FIG. 18, the rough surface portions 82G, 83G include multiple recesses and projections, and a height H1 of each projection of the rough surface portion 82G is higher than a height H2 of each projection of the rough surface portion 83G.

Since the rough surface portion 82G is provided with the multiple recesses and projections, a contact area between the positive electrode 43G and a rough surface portion 82G is greater than a contact area between the current collecting plate 40H and the positive electrode 43G. Similarly, a contact area between the rough surface portion 83G and the negative electrode 45A is greater than a contact area between the current collecting plate 40H and the negative electrode 45A. As a result, an adhesive strength between the positive electrode 43G and the rough surface portion 82G is greater than an adhesive strength between the current collecting plate 40H and the positive electrode 43G; and an adhesive strength between the rough surface portion 83G and the negative electrode 45A is greater than an adhesive strength between the current collecting plate 40H and the negative electrode 45A.

Through this, even if the current collecting plate 40G becomes warped, or the like, the positive electrode 43G and the negative electrode 45G can be suppressed from being separated from the current collecting plate 40G. In order to enhance the tight contact between the positive electrode 43G and the current collecting plate 40G and the tight contact between the negative electrode 45A and the current collecting plate 40G, a positive electrode material and a negative electrode material may be thermal-sprayed or the positive electrode material may be sintered so as to enhance the tight contact.

The projections of the rough surface portion 82G come into the positive electrode 43, a current collecting distance between the positive electrode 43G and the current collecting plate 40G is shorter than a current collecting distance between the current collecting plate 40H and the positive electrode 43G; thus an electric resistance of the positive electrode 43G can be reduced to be lower. Similarly, the electric resistance of the negative electrode 45A can be reduced to be lower by the rough surface portion 83G.

Here, the positive electrode 43G contains nickel hydroxide as the positive electrode active material. Nickel hydroxide has a lower electric conductivity. Hence, if the nickel positive electrode becomes thicker, an electric resistance in the thickness direction becomes increased; consequently, a desired battery performance might not be obtained.

In the bipolar battery according to the embodiment 5, the height H1 of each projection of the rough surface portion 82G is higher than the height H2 of each projection of the rough surface portion 83G so that the positive electrode 43G partially has a thinner thickness, to thereby attain reduction in electric resistance of the positive electrode 43G.

The aforementioned rough surface portions 82G, 83G may be formed through press working such as embossing, physical surface treatment such as shot blasting, chemical surface treatment such as etching, electroplating treatment such as dispersal plating, etc., for example.

In an example shown in FIG. 17, there has been described the example of providing both the rough surface portion 82G and the rough surface portion 83G, but one of the rough surface portion 82G and the rough surface portion 83G may be provided, instead.

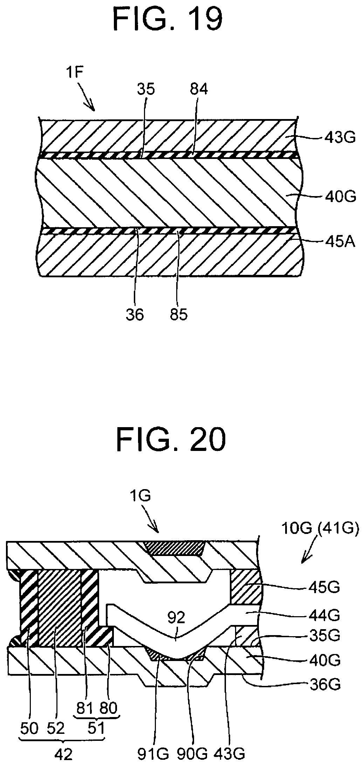

FIG. 19 is a cross sectional view showing a part of a bipolar battery 1F according to the present embodiment 5. As shown in FIG. 19, an electric conductive layer 84 is formed on the upper surface 35 of the current collecting plate 40G, and the positive electrode 43G is formed on this electric conductive layer 84. Similarly, an electric conductive layer 85 is formed on the lower surface 36, and the negative electrode 45A is formed on this electric conductive layer 85.

The electric conductive layers 84, 85 are made of electric conductive carbon, and carbon black, CNT (carbon nanotubes or a material including carbon nanotubes and fullerene) or the like may be employed. The electric conductive layers 84, 85 are formed by blending carbon black or CNT with a binder and water, and applying this on the surface of the current collecting plate 40G through screen printing or the like, for example.

An electric resistance of the positive electrode 43G is high, so that a contact resistance between the positive electrode 43G and the current collecting plate 40G is likely to be high. On the other hand, by forming the electric conductive layer 84 between the positive electrode 43G and the current collecting plate 40G, it is possible to reduce the contact resistance between the positive electrode 43G and the current collecting plate 40G. In addition, by bringing the positive electrode 43G and the current collecting plate 40G to adhere to each other via the electric conductive layer 84, it is possible to promote tight contact of the positive electrode 43.

Similarly, by the electric conductive layer 85, it is possible to reduce the contact resistance between the negative electrode 45A and the current collecting plate 40G, while it is possible to promote improvements in the tight contact of the negative electrode 45A. In an aqueous battery such as a nickel hydrogen battery, for example, at the charging time, electrolysis of water contained in the electrolytic solution is caused as the side reaction of the electrode, so that the electrolytic solution might be exhausted. In the embodiment 6, a bipolar battery promoting suppression of exhaustion of the electrolytic solution will be described.

FIG. 20 is a cross sectional view showing a part of a bipolar battery 1G according to the present embodiment 6. As shown in this FIG. 20, a recess 90G is formed in an upper surface 35G of the current collecting plate 40G of the unit cell 10G. The recess 90G is located between the placement position of the unit battery 41G (the contact portion between the positive electrode 43A and the upper surface 35G) and the seal member 42G. An electrolytic solution 91G is stored in the recess 90G.

The electrolytic solution 91G may be stored in the recess 90G in a state in which a liquid holding material such as a gel polymer sponge is permeated with the electrolytic solution 91G, for example.

The outer circumferential edge of a separator 44G is disposed on the stepped portion 80. The separator 44G includes a bent portion 92 that is bent in a manner as to come out between the positive electrode 43G and the negative electrode 45G, and then go into the recess 90G, and thereafter, go toward the stepped portion 80. An apex of the bent portion 92 is soaked in an electrolytic solution 91G.

Even if the electrolytic solution with which the separator 44G is impregnated is decomposed, the electrolytic solution 91G in the recess 90G is supplied to the separator 44G, thus suppressing exhaustion of the electrolytic solution in the separator 44G.

By configuring the other unit cells 10 in the same manner as that of the unit cell 10G, in the bipolar battery 1G, it is possible to suppress occurrence of exhaustion of the electrolytic solution.

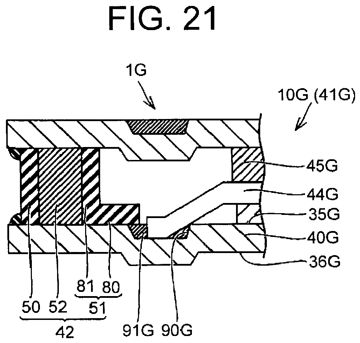

FIG. 21 is a partial cross sectional view showing a variation of the bipolar battery 1G. As shown in the FIG. 21, the outer circumferential edge of the separator 44G may be thermal-welded in the recess 90G.

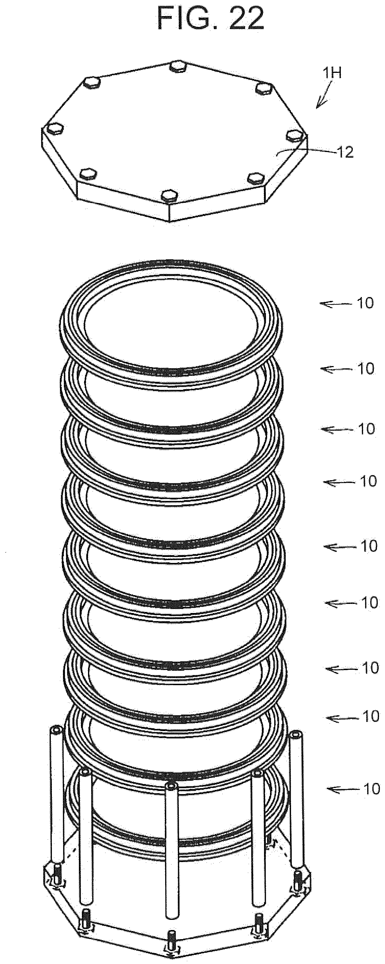

In the aforementioned embodiments 1 to 6, there has been described the case in which the plan shape of each unit cell 10 is a rectangular shape, but the shape of each unit cell 10 may be formed in a circular shape as with that of a bipolar battery 1H of FIG. 22; and various shape may be employed.

As aforementioned, the embodiments 1 to 6 have been described, but the configurations described in the respective embodiments 1 to 6 may be combined with one another.

For example, the heat insulating members 70, 71 described in the embodiment 2 may be combined to the bipolar battery 1 of the embodiment 1. In addition, the configuration of the heat-dissipating portions 66, 67, and the configuration of the insulating film 68 described in the embodiment 3 may be combined to the configuration of the bipolar battery 1 or 1A.

The shape of the separator 44 and the configuration of the stepped portion 80 described in the embodiment 4 may be applied to the configuration of the bipolar battery 1, 1A, or 1C.

The configuration of the rough surface portions 82G, 83G and the configuration of the electric conductive layer 84 described in the embodiment 5 may be applied to the configurations of the bipolar batteries 1 to 1D.

The configuration of the recess 90G and others described in the embodiment 6 may be applied to the configurations of the bipolar batteries 1 to 1E.

The embodiments described above are merely examples in all aspects and should not be considered to be limiting. It is intended that the scope of the present invention is defined not by the description presented above but by the claims below and includes meanings equivalent to the scope of the claims and all modifications within the scope.

The bipolar battery disclosed in the present disclosure may be applied to an electric vehicle or a fuel cell vehicle such as a hybrid vehicle and an electric vehicle, for example.

## Claims

1. A bipolar battery (1;1A;1B;1C;1D;1E; 1F;1G;1H) comprising:
a first end portion (13);
a second end portion (14);
a stacked body (11) including a plurality of unit cells (10;10A;10B;10C;10D;10E), the plurality of unit cells (10;10A;10B;10C;10D;10E) stacked between the first end portion (13) and the second end portion (14); and
a fastening tool (12) pressing the first end portion (13) and the second end portion (14) such that the fastening tool (12) fastens the stacked body (11),
each of the plurality of unit cells (10;10A;10B;10C;10D;10E) including
a current collecting plate (40; 40G; 40H) including a first main surface (35) and a second main surface (36) that are arranged in a stacking direction of the plurality of unit cells (10;10A;10B;10C;10D;10E),
a unit battery (41; 41G) including a separator (44) impregnated with an electrolytic solution, the unit battery (41; 41G) being disposed on the first main surface (35),
a seal member (42) provided on the first main surface (35), the seal member (42) surrounding a periphery of the unit battery (41; 41G), and the seal member (42) being in tight contact with the current collecting plates (40; 40G; 40H) adjacent to the seal member (42) in the stacking direction by a pressing force from the fastening tool (12).

2. The bipolar battery (1;1A;1B;1C;1D;1E; 1F;1G;1H) according to claim 1, wherein
the fastening tool (12) includes:
a first pressing plate (20) pressing the first end portion (13) of the stacked body (11);
a second pressing plate (21) pressing the second end portion (14); and
a plurality of connecting members (23) connected to the first pressing plate (20) and the second pressing plate (21), the plurality of connecting members (23) being arranged such that the plurality of connecting members (23) are apart from each other, and
the stacked body (11) is exposed to the outside.

3. The bipolar battery (1A;1C) according to claim 2, wherein
when the current collecting plate (40) and the seal member (42) are viewed from the stacking direction,
the seal member (42) is located within a region of the current collecting plate (40), and
the current collecting plate (40) includes a heat-dissipating portion (66,67) outwardly protruding from the seal member (42).

4. The bipolar battery (1B) according to claim 3, wherein
the current collecting plate (40) includes an electric insulating member (29,30) covering a portion of the current collecting plate (40) located more outward than the seal member (42).

5. The bipolar battery (1;1A) according to any one of claims 1 to 4, wherein
the fastening tool (12) includes
a first pressing plate (20) pressing the first end portion (13) of the stacked body (11),
a second pressing plate (21) pressing the second end portion (14), and
a heat insulating member (70,71) disposed at least one of between the first pressing plate (20) and the first end portion (13) and between the second pressing plate (21) and the second end portion (14).

6. The bipolar battery (1;1A) according to claim 5, wherein
the heat insulating member (70,71) is an electric insulating material.

7. The bipolar battery (1;1A;1B;1C,1D;1E; 1F;1G;1H) according to any one of claims 1 to 6, wherein
when the unit battery (41; 41G) is viewed from the stacking direction,
the separator (44) covers a part of the first main surface (35) that is located between a placement part of each unit battery (41;41G) and a placement position of seal member (42).

8. The bipolar battery (1D) according to any one of claims 1 to 7, wherein
the seal member (42) includes a stepped portion on which an outer circumferential edge of the separator (44) is placed.

9. The bipolar battery (IE) according to any one of claims 1 to 8, wherein
the stacked body (11) includes first current collecting plates and second current collecting plates arranged in the stacking direction,
each of the unit batteries (41; 41G) is held between each of the first current collecting plates and each of the second current collecting plates,
each of the unit batteries (41; 41G) includes a positive electrode (43A, 43G) arranged on the first main surface (35) of each of the first current collecting plates, and a negative electrode (45A, 45G) arranged on the second main surface of each of the second current collecting plates, and each of the unit batteries (41;41G) includes a rough portion (82G,83G) having recesses and projections, the rough portion (82G,83G) is arranged in at least one of a portion of each of the first current collecting plates in which the positive electrode (43A, 43G) is arranged and a portion of each of the second current collecting plates in which the negative electrode (45A, 45G) is arranged.

10. The bipolar battery (IE) according to any one of claims 1 to 8, wherein
the current collecting plate (40G) includes
a positive electrode (43A,43G) arranged on the first main surface (35) of the current collecting plate (40G),
a negative electrode (45A,45G) arranged on the second main surface (36) of the current collecting plate (40G), and
a rough portion (82G,83G) having recesses and projections, the rough portion (82G,83G) is arranged in at least one of a portion of each of the first main surface (35) in which the positive electrode (43A,43G) is arranged and a portion of the second main surface (36) in which the negative electrode (45A,45G) is arranged.

11. The bipolar battery (1F) according to any one of claims 1 to 8, wherein
the stacked body (11) includes first current collecting plates and second current collecting plates arranged in the stacking direction,
each of the unit batteries (41; 41G) is held between each of the first current collecting plates and each of the second current collecting plates,
each of the unit batteries (41;41G) includes a positive electrode (43G) arranged on the first main surface (35) of each of the first current collecting plates, and a negative electrode (45A) arranged on the second main surface (36) of each of the second current collecting plates, and each of the unit batteries includes each of electric conductive films (84,85) arranged in at least one of between the first main surface (35) and the positive electrode (43G) of each of the first current collecting plates and between the second main surface (36) and the negative electrode (45A) of each of the second current collecting plates.

12. The bipolar battery (IF) according to any one of claims 1 to 8, wherein
the current collecting plate (40G) includes
a positive electrode (43A) arranged on the first main surface (35) of the current collecting plate (40G), and
a negative electrode (45A) arranged on the second main surface of the current collecting plate (40G), and
the unit battery (41;41G) includes an electric conductive film (84,85) arranged in at least one of between the first main surface (35) and the positive electrode (43A) and between the second main surface (36) and the negative electrode (45A).

13. The bipolar battery (1G) according to any one of claims 1 to 12, wherein
the current collecting plates (40G) includes a recess (90; 90G),
the recess (90; 90G) is located between a placement position of the unit battery (41;41G) and the seal member (42) in the current collecting plate (40G),
an electrolytic solution is stored in the recess (90;90G), and
the separator (44) is in contact with the electrolytic solution in the recess (90; 90G).
